Europäisches Patentamt

European Patent Office

Office européen des brevets

(19)

(11) EP 0 386 781 B1

(12) EUROPEAN PATENT SPECIFICATION

(45) Date of publication and mention
of the grant of the patent:
**19.06.1996 Bulletin 1996/25**

(51) Int Cl.[6]: **H04L 25/49**

(21) Application number: **90104530.2**

(22) Date of filing: **09.03.1990**

(54) **Method for scrambling/descrambling data by word-by-word processing**

Verfahren zum Verwürflung/Entwürflung von Daten mittels Wort-zu-Wort-Verarbeitung

Procédé de brouillage/débrouillage de données par traitement mot à mot

(84) Designated Contracting States:
**DE GB SE**

(30) Priority: **09.03.1989 JP 54900/89**

(43) Date of publication of application:
**12.09.1990 Bulletin 1990/37**

(73) Proprietor: **Oki Electric Industry Co., Ltd.
Tokyo (JP)**

(72) Inventors:
- **Maeno, Takahiro, Oki Electric Industry Co., Ltd.
  Minato-ku, Tokyo (JP)**
- **Sato, Yasunori, Oki Electric Industry Co., Ltd.
  Minato-ku, Tokyo (JP)**

(74) Representative: **Betten & Resch
Reichenbachstrasse 19
80469 München (DE)**

(56) References cited:
- **IEEE MICRO. vol. 3, no. 3, June 1983, NEW YORK US pages 40 - 50; A. PEREZ: 'Byte-wise CRC Calculations'**
- **BRITISH TELECOMMUNICATIONS ENGINEERING. vol. 1, no. 2, July 1982, LONDON GB pages 111 - 114; I. B. RIDOUT ET AL.: 'The Principles of Scramblers and Descramblers Designed for Data Transmission Systems'**
- **CCITT THE INTERNATIONAL TELEGRAPH AND TELEPHONE CONSULTATIVE COMMITEE, Red Book, Data Communication over the Telephone Network, pages 170 - 198, 8th Plenary Assembly, Malaga-Torremolinos, 8th - 19th October 1984, vol. 8, no. 1, 1985, Geneva, CH; 'Recommendation V. 27 - 4800 bits per second moden with manual equalizer standardized for use on leased telephone-type circuits'**
- **COMPUTER DESIGN. no. 3, March 1974, LITTLETON, MASSACHUSETTS US pages 91 - 96; K. M. HELNESS: 'Implementation of a Parallel Cyclic Redundancy Check Generator'**

EP 0 386 781 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a scrambler/descrambler method for use in a modulator/demodulator (modem) which is applicable to data communication.

Description of the Prior Art

In a modem for implementing data communication over a telephone network, a transmit and a receive section have a so-called scrambler and a descrambler, respectively. This is especially true with a modem of the type adopting a particular phase modulation system which is prescribed by CCITT (Comité Consulatif International Télégraphique et Téléphonique) Recommendations V. 27, V. 27bis, V.27ter, etc. A scrambler plays the role of a circuit for randomizing an input signal by a generating polynomial, and preventing codes having relatively short periods ascribable to the nature of a generating polynomial from repeating without being randomized. On the other hand, a descrambler executes a procedure inverse to the randomization which uses a generating polynomial and invalidates the protection against the repetition of codes having relatively short periods as effected by the scrambler, thereby reconstructing the signal.

One of scrambler /descramblers heretofore proposed is implemented by a shift register, a scrambler/descrambler circuit, and a monitor circuit The monitor circuit is constituted by a counter and a counter control for controlling the counter. While a control output of the counter control is fed to the counter, it is provided with a time delay particular to the propagation path. A clock generator delivers a stepping clock to the counter and is made up of an oscillator and a frequency divider, for example. The scrambler/descrambler circuit has a switch in a data output circuit thereof which is interconnected to the shift register. The switch is caused into connection with the scrambling side when the apparatus functions as a transmitter or into connection with the descrambling side when the latter functions as a receiver.

The shift register and scrambler/descrambler circuit produces a random code whose period corresponds to 127 bits or decodes such a random code by using a generating polynomial $1 + x^{-6} + x^{-7}$. The monitor circuit plays the role of a protection circuit for preventing codes having relatively short periods from occurring continuously without being randomized due to the nature of the generating polynomial. Specifically, the monitor circuit inverts the output bits of the scrambler/descrambler circuit when codes whose periods extend to 1-bit, 3-bit and 9-bit periods have occurred continuously for the period of 42 successive bits or when codes whose periods correspond to 2 bits, 4 bits, 6 bits and 12 bits have repeated for the period of 45 successive bits, in association with the ninth and twelfth bit positions of the shift register.

British Telecommunications Engineering, Vol. 1 (1982) July, No. 2, Old Woking, Surrey, Great Britain, describes in an article titled "The Principles of Scramblers and Descramblers Designed for Data Transmission Systems", by I.B. Ridout, how self-synchronizing scramblers and descramblers operate, using simple mathematical notation. The operation of a scrambler/descrambler including its adverse-state detector (ASD), is given. The article concludes by describing a large-scale integrated circuit (LSI) designed and fabricated at the British Telecom (BT) Research Laboratories. The LSI chip can be used to perform scrambling, descrambling, pseudo-random pattern generation, and error detection, on bit-by-bit operation.

Since the prior art scrambler/descrambler involves bit-by-bit operations as stated above, it cannot be implemented by a processor. In the state of art, despite that a majority of the functions assigned to a modem is executed by a processor, the scrambler/descrambler relies on exclusive hardware in the form of a logical circuit which is independent of the processor. This requires an extra area and extra cost for installing the exclusive hardware. Concerning the processor, the hardware resource, i.e., the time over which the processor can be used and the area which the processor occupies are not efficiently used.

SUMMARY OF THE INVENTION

It is therefore an object of the present invention to provide a scrambler/descrambler method capable of executing scrambling or descrambling processing word by word which is the basic unit of processor operations.

The methods of scrambling/descrambling according to the invention are described in claims 1 an 2.

A scrambling/descrambling apparatus for scrambling/descrambling input data to produce output data comprises a data memory for storing a data word, a bit invert flag, and numerical data, a bit shift operating section for performing, on receiving a bit of data to be outputted or a bit of input data, a bit shift operation with that bit and storing resultant data in the data memory in the form of a first data word, a randomizing/derandomizing section for randomizing or derandomizing the input data by using the first data word and based on a generating polynomial and, depending on the state represented by the bit invert flag, inverting the bit of the data to be outputted to develop output data, a count processing section for incrementing or decrementing the numerical value stored in the data memory and, depending on the numerical value, selectively setting the bit invert flag to a predetermined state, and a count controlling section for replacing the numerical value with a predetermined initial value on the basis of the first data word and bit invert flag. The storing section holds a second and a third data word, bits of which corresponding to a particular bit of the first data word are a ZERO and a ONE, respectively. The count controlling section reads selectively either one of the second and third data words out of the data memory depending on the value of the bit which is inputted to the bit shift operating section, Exclusive-ORs the data word read out, first data word, and third data word, performs a masking operation with a data word resulting from the Exclusive-ORing for validating a bit corresponding in position to the particular bit position of the first data word while invalidating the remaining bits, and replaces the numerical value with the initial value when a data word resulting from the masking operation is indicative of a ZERO or when the bit invert flag is in the predetermined state.

A scrambler for scrambling input data to produce output data comprises a data memory for storing a data word, a bit invert flag, and numerical data, a bit shift operating section for performing, on receiving a bit of data to be outputted, a bit shift operation with that bit and storing resultant data in the data memory in the form of a first data word, a randomizing section for randomizing input data by using the first data word and based on a generating polynomial and, depending on the state represented by the bit invert flag, inverting the bit of the data to be outputted to develop output data, a count processing section for incrementing or decrementing the numerical value stored in the data memory and, depending on the numerical value, selectively setting the bit inert flag to a predetermined state, and a count controlling section for substituting a predetermined initial value for the numerical value on the basis of the first data word and bit invert flag. The data memory holds a second and a third data word, bits of which corresponding in position to a particular bit of the first data word are a ZERO and a ONE, respectively. The count controlling section reads selectively either one of the second and third data words out of the storing means in association with the value of the bit which is inputted to the bit shift operating section, Exclusive-ORs the data word read out, first data word, and third data word, performs a masking operation with a data word resulting from the Exclusive-ORing for validating a bit corresponding in position to the particular bit position of the first data word while invalidating the remaining bits, and replaces the numerical value with the initial value when a data word resulting from the masking operation is indicative of a ZERO or when the bit invert flag is in the predetermined state.

A descrambler for descrambling input data to produce output data comprises a data memory for storing a data word, a bit invert flag, and numerical data, a bit shift operating section for performing, on receiving a bit of input data, a bit shift operation with that bit and storing resultant data in the data memory in the form of a first data word, a derandomizing section for derandomizing the input data by using the first data word and based on a generating polynomial and, depending on the state represented by the bit invert flag, inverting a bit of data to be outputted to develop output data, a count processing section for incrementing or decrementing the numerical value stored in the data memory and, depending on the numerical value, selectively setting the bit invert flag to a predetermined state, and a count controlling section for setting the numerical value to a predetermined initial value on the basis of the first data word and bit invert flag. The data memory holds a second and a third data word, bits of which corresponding in position to a particular bit of the first data word are a ZERO and a ONE, respectively. The count controlling section reads selectively either one of the second and third data words out of the data memory in association with the value of the bit which is inputted to the bit shift operating section, Exclusive-ORs the data word read out, first data word, and third data word, performs a masking operation with a data word resulting from the Exclusive-ORing for validating a bit corresponding in position to the particular bit position of the first data word while invalidating the remaining bits, and replaces the numerical value with the initial value when a data word resulting from the masking operation is indicative of a ZERO or when the bit invert flag is in the predetermined state.

The data memory is loaded with a second and a third data word which have respectively a ZERO and a ONE at their data bits corresponding in position to particular data bits of a first data word representative of the result of a bit shift operation, e. g. the eight, ninth and twelfth bits. Then, the value of a data bit db inputted next in the bit shift operation is evaluated. If the value is a ZERO, the second, first and third data words are Exclusive-ORed; if it is a ONE, the third, first, and third data words are Exclusive-ORed. This is followed by a masking operation for validating, among the bit sequence resultant from the Exclusive-ORing, the data bits corresponding to the eighth, ninth and twelfth bits while invalidating the other data bits. As a result, the content of the data word representative of the result of the masking operation will be a ZERO when none of the values of the eighth, ninth and twelfth data bits of the first data word coincides with the data bits db, or it will not be a ZERO when at least one of the former coincides with the latter. Subsequently, if either one of the content of a bit invert flag stored in the data memory and the data word representative of the result of the masking operation is in a predetermined state, the numerical value stored in the data memory is replaced with an initial value. The predetermined state includes a state wherein the content of the data word representative of the result of the masking operation is a ZERO or the content of the bit invert flag is TRUE, and only in this state the numerical value is replaced with the initial value. The procedure described above is executed by word-by-word operations which do not involve bit shift operation processing.

## BRIEF DESCRIPTION OF THE DRAWINGS

The objects and features of the present invention will become more apparent from the consideration of the following detailed description taken in conjunction with the accompanying drawings in which:

FIG. 1 is a block diagram schematically showing a preferred embodiment of the scrambler/descrambler in accordance with the present invention;

FIG. 2 is a flowchart demonstrating a specific operation of the illustrative embodiment for executing count control processing;

FIG. 3 is a schematic block diagram showing a specific construction of a processor which implements the illustrative embodiment;

FIGS. 4A through 4E depict examples of a data word, mask pattern and result of operation available with the illustrative embodiment; and

FIG. 5 shows a prior art scrambler/descrambler schematically.

## DESCRIPTION OF THE PREFERRED EMBODIMENT

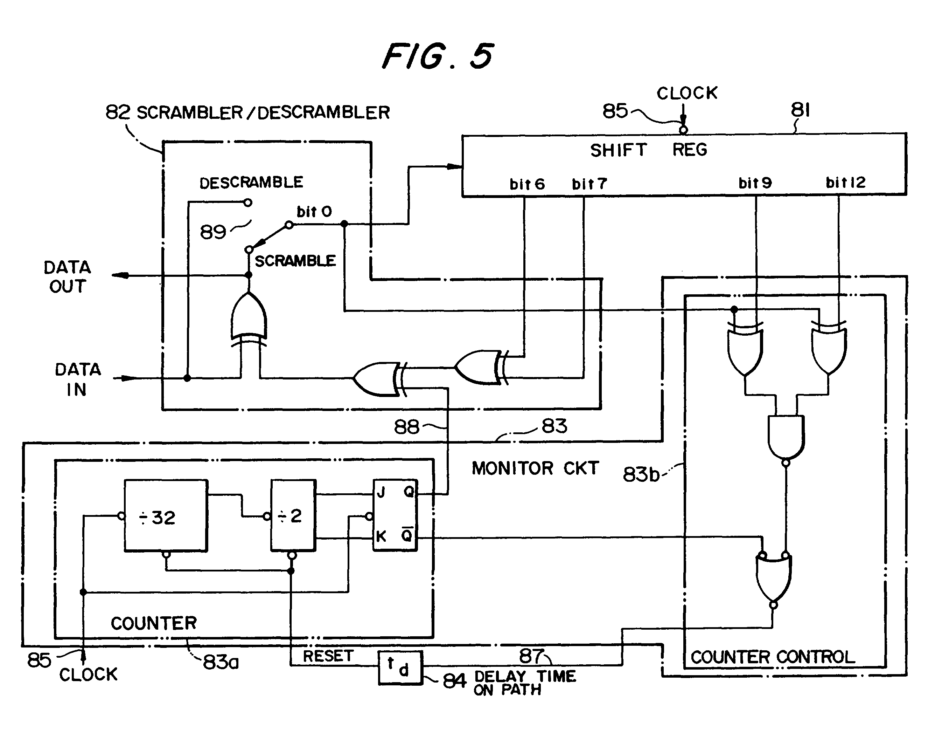

To better understand the present invention, a brief reference will be made to a prior art scrambler/descrambler, shown in FIG. 5. As shown, the prior art scrambler/descrambler is basically made up of a shift register 81, a scrambler/descrambler circuit 82, and a monitor circuit 83. The monitor circuit 83 has a counter 83a and a counter control 83b for controlling the counter 83a. The counter control 83b produces a control output 87 and feeds it to the counter 83a as a signal for resetting the latter. The control output or reset signal 87 is delayed on the propagation path by a time td which is represented by the reference numeral 84 in the figure. A clock generator, not shown, feeds a stepping clock 85 to the counter 83a. The clock generator may be implemented by an oscillator and a frequency divider, for example.

The counter 83a delivers an output 88 thereof to the scrambler/descrambler circuit 82. The scramber/descrambler circuit 82 has a switch 89 in an output circuit thereof which is interconnected to the shift register 81. The switch 89 plays the role of a selector for selecting either one of scrambling and descrambling functions which are assigned to the scrambler/descrambler. Specifically, the switch 89 is connected to the scrambling side when the scrambler/descrambler functions in association with the transmitter of a modem or to the descrambling side when the latter functions in association with the receiver.

The shift register 81 and scrambler/descrambler circuit 82 cooperate to produce a random code having a period of 127 bits or decode it by using a generating polynomial $1 + x^6 + x^7$. The monitor circuit 83 serves as a protection circuit for preventing codes having relatively short periods ascribable to the nature of the generating polynomial from occurring continuously without being randomized. Specifically, the monitor circuit 83 inverts the output bits of the scrambler/descrambler circuit 82 when codes whose periods extend to one-bit, three-bit and nine-bit periods occur over the period of 45 consecutive bits and when codes having periods of two bits, four bits, six bits and twelve bits occur over the period of 45 consecutive bits, collateral with the ninth and twelfth bit positions of the shift register 81.

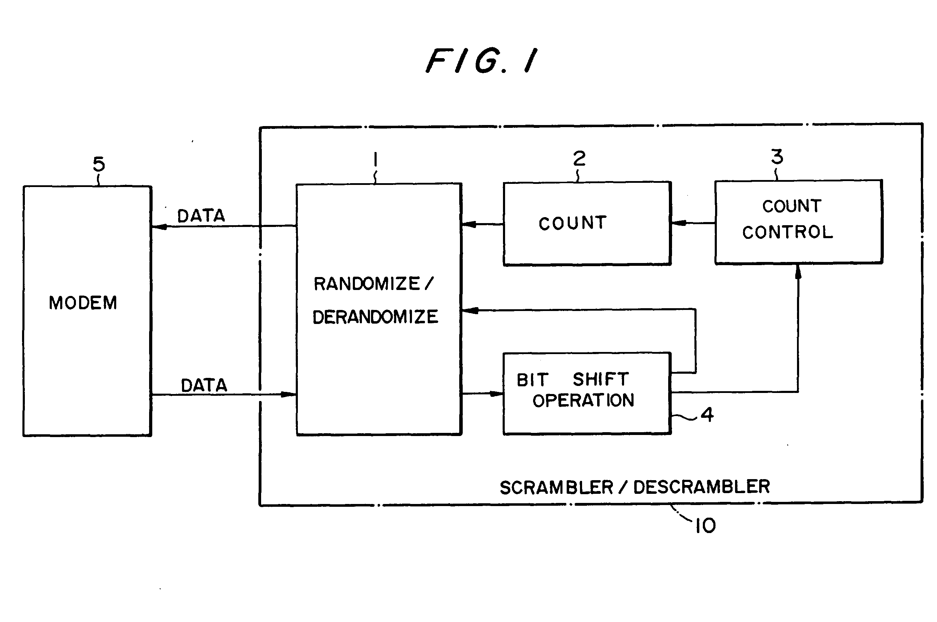

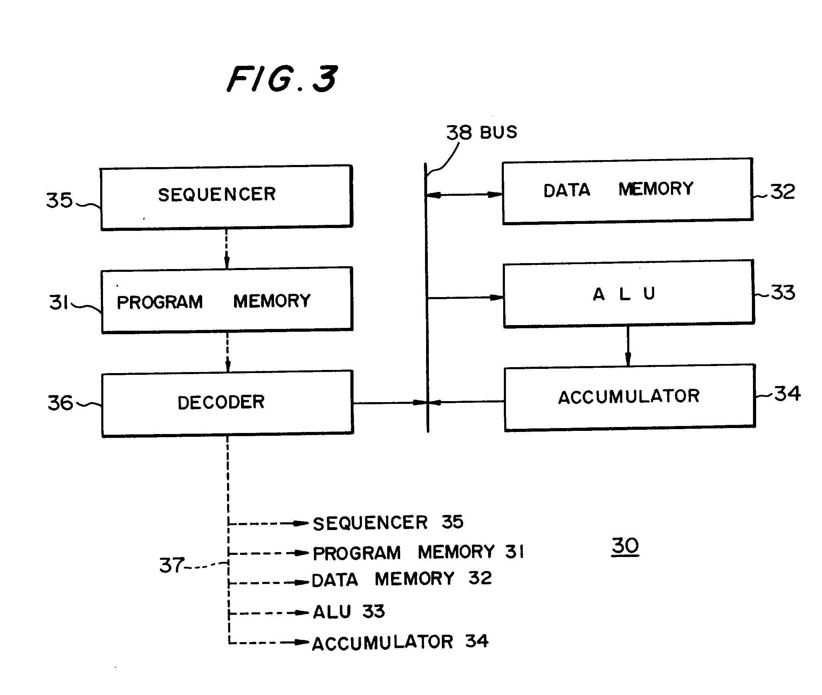

Referring to FIG. 1, a scrambler/descrambler embodying the present invention is shown and generally designated by the reference numeral 10. The scrambler/descrambler 10 is shown as having a randomizing/derandomizing section 1, a count processing section 2, a count controlling section 3, and a bit shift operating section 4. When the scrambler/descrambler 10 functions as a scrambler, the randomizing/derandomizing section 1 selects the same data as the data which should be outputted to a modem 5. When the scrambler/descrambler 10 serves as a descrambler, the randomizing/derandomizing section 1 selects data sent from the modem 5 and delivers them to the bit shift operating section 4. In response, the bit shift operating section 4 performs a one-bit shift operation processing with the incoming data. The randomizing/derandomizing section 1 randomizes or derandomizes data by using the generating polynomial $1 + x^6 + x^7$ and based on the values of predetermined bits, e. g. , the sixth and seventh bits of data which are representative of the result of the shift operation processing as well as the data fed from the modem 5. The randomized or derandomized data are delivered to the modem 5. The count processing section 2 updates a numerical value stored in a data memory 32 which will be described with reference to FIG. 3, either by incrementing or decrementing it. Also, based on the content of the numerical value, the count processing section 2 performs a carrying operation, i. e. , turns a bit invert flag $q$ stored in the data memory 32 to TRUE or FALSE. The bit invert flag $q$ is adapted to command the inversion of a bit When the data of the bit invert flag has a predetermined value such as TRUE, the randomizing/derandomizing section 1 inverts the bit of data to be sent to the modem 5. The count controlling section 3 resets the above-stated numerical value, i. e., replaces it with an initial value when none of the predetermined bits of the data representative of the result of the bit shift operation such as the eighth, ninth and twelfth bit coincides with a bit db to be applied to the bit shift operating section 4 next, i.e., the zero-th bit or when the value of the bit invert flag $q$ is TRUE

By the various sections each serving a different function as described above, data which the modem 5 receives and delivers are scrambled or descrambled. Further, codes having relatively short periods ascribable to the nature of the generating polynomial are prevented from occurring continuously without being randomized.

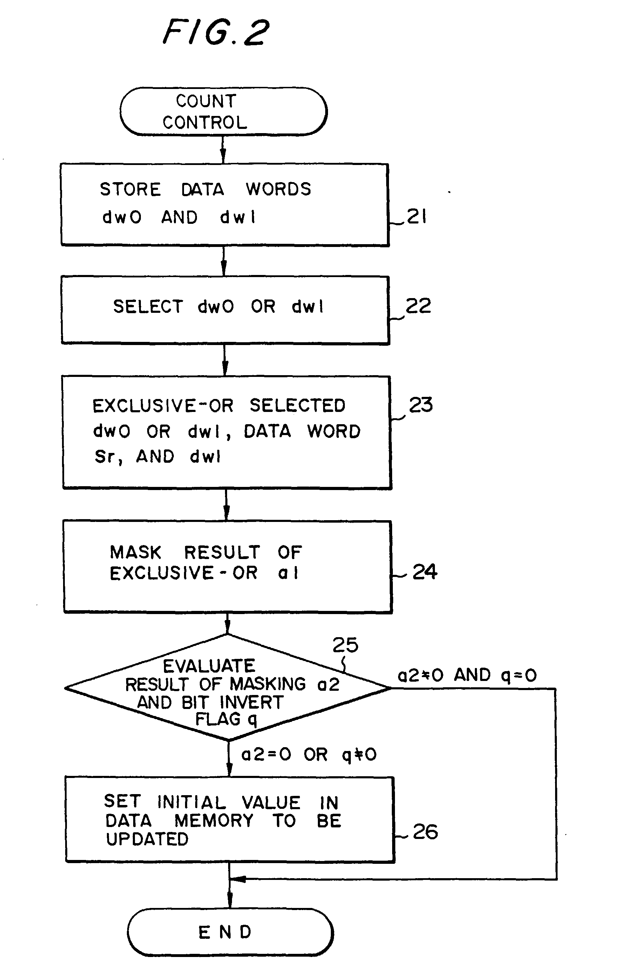

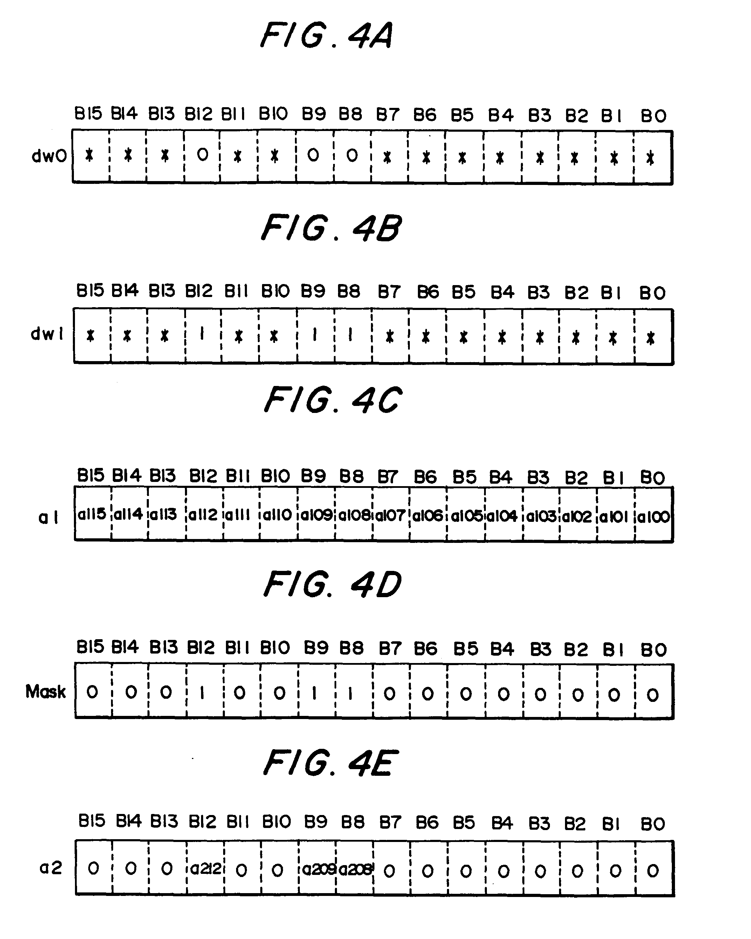

Referring to FIGS. 2, 3 and 4A-4E, the operation of the count controlling section shown in FIG. 1 will be described in detail. Specifically, FIG. 2 demonstrates the operation of the count controlling section 3 in a flowchart, FIG. 3 shows a processor 30 in a schematic block diagram, and FIGS. 4A-4E show bit sequences each appearing in a different processing stage. In the illustrative embodiment, it is assumed that a data word has a bit length of sixteen bits, and that the processor 30 executes count control processing. Specifically, the count control section 3 is advantageously implemented by the processor 30.

As shown in FIG. 3, the processor 30 has a program memory 31 loaded with programs, the previously mentioned data memory 32, an arithmetic and logical unit (ALU) 33 adapted for arithmetic and logical operations, an accumulator 34 for holding the result of operations performed by the ALU 33, a sequencer 35, and a decoder 36. A control signal path 37 extending out from the decoder 36 is connected to the circuits 31 to 35, as indicated by dotted lines in the figure. The data memory 32, ALU 33, accumulator 34 and decoder 36 are interconnected to a bus 38, as illustrated.

The sequencer 35 controls the address of the program memory 31 by way of the control signal path 37. Instructions stored in a particular storage location which is designated by the sequencer 35 are read out and fed to the decoder 36. The decoder 36 transforms the content of the program memory 31 into a control signal or into a control signal and data so as to control the operations of the program memory 31, data memory 32, ALU 33, accumulator 34 and sequencer 35 while, when the control signal is accompanied by data, transferring the data to the data memory 32 and ALU 33. The interchange of data among the data memory 32, ALU 33, accumulator 34 and decoder 36 is implemented by the bus 38.

In operation, the count controlling section 3 selects a data word dw0 when the data bit db inputted to the bit shift operating section 4 next is a (logical) ZERO, while selecting a data word dw1 when the data bit db is a (logical) ONE (steps 21 and 22, FIG. 2). More specifically, the count controlling section 3 transfers to the accumulator 34 a data word dw0 shown in FIG. 4A which is stored in the data memory 32, FIG. 3, while transferring the data bit db to the ALU 33. Then, the data bit db is evaluated. If the evaluated data bit db is a ONE, the data word dw1 shown in FIG. 4B and also stored in the data memory 32 in the data memory 32 is transferred to the accumulator 34 so as to replace the existing data word dw0. If the evaluated data bit db is a ZERO, the data word dw0 having been transferred to the accumulator 34 is not replaced. In FIGS. 4A and 4B, the symbol "*" indicates any desired or wild value.

Subsequently, either the data word dw0 or the data word dw1 which has been selected as stated above, a data word sr which will be described, and the data word dw1 are Exclusive-ORed (step 23, FIG. 2). More specifically, the data word dw0 or dw1 held in the accumulator 34 and a data word sr representative of the result of operation of the bit shift operating section 4, FIG. 1, are Exclusive-ORed, and the result is written in the accumulator 34. Then, the Exclusive-OR result held in the accumulator 34 and the data word dw1 stored in the data memory 32 are Exclusive-ORed, and the result a1 is written in the accumulator 34. The Exclusive-OR result a1 is shown in FIG. 4C.

The Exclusive-OR operation is followed by a masking operation (step 24, FIG. 2). The masking operation is such that, among the data bits of the Exclusive-OR result a1, only the data bits at the eighth, ninth and twelfth bit positions are validated while the other data bits are invalidated. More specifically, a mask pattern Mask shown in FIG. 4D is stored in the data memory 32 beforehand. The result of operation a1 lodged in the accumulator 34 and the mask pattern Mask are ANDed, and the result, i. e., a data word a2 is written in the accumulator 34. The data word a2 is shown in FIG. 4E and may be logically expressed as:

$$a2 = a208 + a209 + a212$$

$$= a108 + a109 + a112$$

$$= db \oplus b8 \oplus 1 + db \oplus b9 \oplus 1 + db \oplus b12 \oplus 1$$

On the other hand, the content of the count control processing may be represented by a logical equation:

$$\text{Reset} = F(b) + q$$

where $F(b)$ is equal to $db \oplus b8 \cdot db \oplus b9 \cdot db \oplus b12$, and $q$ is a data word indicative of the content of the bit invert flag which was derived from a carrying command. A counter is not initialized when Reset is a ZERO and is initialized when Reset is not a ZERO.

However, the term $F(b)$ can be rewritten as:

$$F(b) = \overline{db \oplus b8} \cdot \overline{db \oplus b9} \cdot \overline{db \oplus b12}$$

$$= \overline{\overline{db \oplus b8} \cdot \overline{db \oplus b9} \cdot \overline{db \oplus b12}}$$

$$\overline{\overline{db \oplus b8}} + \overline{\overline{db \oplus b9}} + + \overline{\overline{db \oplus b12}}$$

$$= \overline{\overline{\{(db \oplus b8) \cdot 1}} + \overline{(db \oplus b8) \cdot 0}}$$

$$+ \overline{\overline{(db \oplus b9) \cdot 1}} + \overline{(db \oplus b9) \cdot 0}$$

$$+ \overline{\overline{(db \oplus b12) \cdot 1}} + \overline{(db \oplus b12) \cdot 0\}}$$

$$= \overline{db \oplus b8 \oplus 1 + db \oplus b9 \oplus 1 + db \oplus b12 \oplus 1}$$

Therefore,

$$F(b) = \overline{a2}$$

It will be seen from the above that the count control processing up to the generation of the item F (b) is completed by the procedure described so far, i.e. by the masking processing 24, FIG. 2, and preceding processing. In the logical operations shown above, ORing, ANDing and Exclusive-ORing are represented by "+", "·" and "⊕", respectively, while the eight, ninth and twelfth bits of the data word sr are represented by "b8", "b9" and "b12", respectively.

After the masking processing 24, the content of the data word a2 which is representative of the result of operation and the content of the bit invert flag data $q$ stored in the data memory 32 are evaluated (step 25, FIG. 2). Then, the content of the data memory to be updated is replaced with the initial value (step 26). More specifically, the content of the data word a2 held in the accumulator 34 is evaluated and, if it is a ZERO, the intial value is set. If the evaluated content is not a ZERO, the content of the bit invert flag data $q$ is evaluated and, only if it is not a ZERO, the initial value is set.

When a predetermined period of time expires before the setting of the intial value, the bit invert flag data $q$ is turned to TRUE, for example, after the content of the data memory 32 has been incremented or decremented to reach a predetermined value. Then, the randomizing/derandomizing section 1 inverts the bit of the output data. This is successful in eliminating the continuation of codes having relatively short periods which would otherwise occur during randomization/derandomization.

In summary, in accordance with the present invention, count control processing is implemented as word-by-word operations not accompanied by bit shift operations and can, therefore, be desirably executed by a processor. More specifically, scrambling/descrambling software can be loaded on a processor with the total amount of programs which describe the scrambling/descrambling software being reduced, i.e., with a minimum period of time being allocated to scrambling/descrampling operations. It is, therefore, not necessary to provide an arithmetic and logical unit with many kinds of bit shift processing functions. This simplifies the hardware of the processor and reduces the overall amount of hardware. The processor does not need the help of exclusive hardware which would otherwise be required for scrambling/descrambling operations and implemented as a logical circuit Hence, efficient use of the hardware resource of a processor is promoted to cut down the overall amount of hardware constituting a modem.

## Claims

1. A method of scrambling input data to produce scrambled output data, comprising the steps of:

   receiving the input data;
   shifting the input data on a bit-by-bit basis to produce a first data word having a predetermined number of bits; and
   randomizing the input data by using the first data word
        CHARACTERIZED IN THAT
   said method further comprises the steps of:

      (a) preparing a second data word (dw0) having the predetermined number of bits, of which at least one bit corresponding in position to a predetermined bit position (B12, B9, B8) of the first data word represents a first binary state and the remaining bit or bits are invalid;
      (b) preparing a third data word (dw1) having the predetermined number of bits, of which at least one bit corresponding in position to the predetermined bit position (B12, B9, B8) of the first data word represents a second binary state, opposite to the first binary state, and the remaining bit or bits are invalid;

(c) evaluating a bit of the first word to determine whether the bit of the first word takes the first or second binary state;

(d) selecting either one of the second and third data words (dw0, dw1), depending on the binary state determined in said step (c);

(e) Exclusive-ORing the selected one of the second and third data words (dw0, dw1), the first data word and the third data word (dw1) to produce a fourth data word (a1);

(f) masking the fourth data word (a1) with a bit other than a bit corresponding in position to the predetermined bit position (B12, B9, B8) of the first data word to produce a fifth data word (a2) which includes a valid bit (a212, a209, a208) corresponding in position to the predetermined bit position (B12, B9, B8) of the first data word with a remaining bit invalid to the first binary state;

(g) evaluating the fifth data word (a2) to determine whether or not all bits of the fifth data word (a2) take the first binary state;

(h) repeating said steps (a) through (g) and counting when all bits of the fifth data word (a2) are determined as the first binary state in said step (g) repeated; and

(i) inverting a bit of randomized data when a count obtained in said step (h) reaches a predetermined value to produce resultant data as the output data.

2. A method of descrambling input data to produce descrambled output data, comprising the steps of:

receiving the input data;

shifting the input data on a bit-by-bit basis to produce a first data word having a predetermined number of bits; and

derandomizing the input data by using the first data word,
CHARACTERIZED IN THAT

said method further comprises the steps of:

(a) preparing a second data word (dw0) having the predetermined number of bits, of which at least one bit corresponding in position to a predetermined bit position (B12, B9, B8) of the first data word represents a first binary state and the remaining bit or bits are invalid;

(b) preparing a third data word (dw1) having the predetermined number of bits, of which at least one bit corresponding in position to the predetermined bit position (B12, B9, B8) of the first data word represents a second binary state, opposite to the first binary state, and the remaining bit or bits are invalid;

(c) evaluating a bit of the first word to determine whether the bit of the first word takes the first or second binary state;

(d) selecting either one of the second and third data words (dw0, dw1), depending on the binary state determined in said step (c);

(e) Exclusive-ORing the selected one of the second and third data words (dw0, dw1), the first data word and the third data word (dw1) to produce a fourth data word (a1);

(f) masking the fourth data word (a1) with a bit other than a bit corresponding in position to the predetermined bit position (B12, B9, B8) of the first data word to produce a fifth data word (a2) which includes a valid bit (a212, a209, a208) corresponding in position to the predetermined bit position (B12, B9, B8) of the first data word with a remaining bit invalid to the first binary state;

(g) evaluating the fifth data word (a2) to determine whether or not all bits of the fifth data word (a2) take the first binary state;

(h) repeating said steps (a) through (g) and counting when all bits of the fifth data word (a2) are determined as the first binary state in said step (g) repeated; and

(i) inverting a bit of derandomized data when a count obtained in said step (h) reaches a predetermined value to produce resultant data as the output data.

**Patentansprüche**

1. Verfahren zum Verwürfeln von Eingangsdaten, um verwürfelte Ausgangsdaten zu erzeugen, mit den Schritten:

Empfangen der Eingangsdaten;

Verschieben der Eingangsdaten Bit für Bit, um ein erstes Datenwort mit einer vorgegebenen Anzahl von Bits zu erzeugen; und

Umrechnen der Eingangsdaten in stochastische Daten unter Verwendung des ersten Datenworts,

DADURCH GEKENNZEICHNET, DASS
das Verfahren ferner die Schritte umfaßt:

(a) Erzeugen eines zweiten Datenworts (dw0) mit der vorgegebenen Anzahl von Bits, wovon wenigstens ein Bit, dessen Position einer vorgegebenen Bitposition (B12, B9, B8) des ersten Datenworts entspricht, einen ersten binären Zustand repräsentiert und das verbleibende Bit oder die verbleibenden Bits ungültig sind;

(b) Erzeugen eines dritten Datenworts (dw1) mit der vorgegebenen Anzahl von Bits, wovon wenigstens ein Bit, dessen Position der vorgegebenen Bitposition (B12, B9, B8) des ersten Datenworts entspricht, einen zweiten binären Zustand repräsentiert, der dem ersten binären Zustand entgegengesetzt ist, und das verbleibende Bit oder die verbleibenden Bits ungültig sind;

(c) Auswerten eines Bits des ersten Worts, um zu bestimmen, ob das Bit des ersten Worts den ersten oder den zweiten binären Zustand annimmt;

(d) Wählen entweder des zweiten oder des dritten Datenworts (dw0, dw1) in Abhängigkeit von dem im Schritt (c) bestimmten binären Zustand;

(e) Bilden von Exklusiv-ODER-Verknüpfungen zwischen dem gewählten der zweiten und dritten Datenwörter (dw0, dw1), dem ersten Datenwort und dem dritten Datenwort (dw1), um ein viertes Datenwort (a1) zu erzeugen;

(f) Maskieren des vierten Datenworts (a1) mit einem Bit, das von einem Bit verschieden ist, dessen Position der vorgegebenen Bitposition (B12, B9, B8) des ersten Datenworts entspricht, um ein fünftes Datenwort (a2) zu erzeugen, das ein gültiges Bit (a212, a209, a208) enthält, dessen Position der vorgegebenen Bitposition (B12, B9, B8) des ersten Datenworts entspricht, wobei ein verbleibendes, ungültiges Bit dem ersten binären Zustand entspricht;

(g) Auswerten des fünften Datenworts (a2), um zu bestimmen, ob sämtliche Bits des fünften Datenworts (a2) den ersten binären Zustand annehmen oder nicht;

(h) Wiederholen der Schritte (a) bis (g) und Zählen, wann im wiederholt ausgeführten Schritt (g) für sämtliche Bits des ersten Datenworts (a2) der erste binäre Zustand bestimmt wird; und

(i) Invertieren eines Bits der in stochastische Daten umgerechneten Daten, wenn ein im Schritt (h) erhaltener Zählwert einen vorgegebenen Wert erreicht, um die resultierenden Daten als die Ausgangsdaten zu erzeugen.

2. Verfahren zum Entwürfeln von Eingangsdaten, um entwürfelte Ausgangsdaten zu erzeugen, mit den Schritten:

Empfangen der Eingangsdaten;
Verschieben der Eingangsdaten Bit für Bit, um ein erstes Datenwort mit einer vorgegebenen Anzahl von Bits zu erzeugen; und
Entfernen der Stochastik aus den Eingangsdaten unter Verwendung des ersten Datenworts,
DADURCH GEKENNZEICHNET, DASS
das Verfahren ferner die Schritte umfaßt:

(a) Erzeugen eines zweiten Datenworts (dw0) mit der vorgegebenen Anzahl von Bits, wovon wenigstens ein Bit, dessen Position einer vorgegebenen Bitposition (B12, B9, B8) des ersten Datenworts entspricht, einen ersten binären Zustand repräsentiert und das verbleibende Bit oder die verbleibenden Bits ungültig sind;

(b) Erzeugen eines dritten Datenworts (dw1) mit der vorgegebenen Anzahl von Bits, wovon wenigstens ein Bit, dessen Position der vorgegebenen Bitposition (B12, B9, B8) des ersten Datenworts entspricht, einen zweiten binären Zustand repräsentiert, der dem ersten binären Zustand entgegengesetzt ist, und das verbleibende Bit oder die verbleibenden Bits ungültig sind;

(c) Auswerten eines Bits des ersten Worts, um zu bestimmen, ob das Bit des ersten Worts den ersten oder den zweiten binären Zustand annimmt;

(d) Auswählen entweder des zweiten oder des dritten Datenworts (dw0, dw1) in Abhängigkeit von dem im Schritt (c) bestimmten binären Zustand;

(e) Bilden von Exklusiv-ODER-Verknüpfungen zwischen dem gewählten der zweiten und dritten Datenwörter (dw0, dw1), dem ersten Datenwort und dem dritten Datenwort (dw1), um ein viertes Datenwort (a1) zu erzeugen;

(f) Maskieren des vierten Datenworts (a1) mit einem Bit, das von einem Bit verschieden ist, dessen Position der vorgegebenen Bitposition (B12, B9, B8) des ersten Datenworts entspricht, um ein fünftes Datenwort (a2) zu erzeugen, das ein gültiges Bit (a212, a209, a208) enthält, dessen Position der vorgegebenen Bitposition (B12, B9, B8) des ersten Datenworts entspricht, wobei ein verbleibendes, ungültiges Bit dem ersten binären Zustand entspricht;

(g) Auswerten des fünften Datenworts (a2), um zu bestimmen, ob sämtliche Bits des fünften Datenworts (a2) den ersten binären Zustand annehmen oder nicht;

(h) Wiederholen der Schritte (a) bis (g) und Zählen, wann im wiederholt ausgeführten Schritt (g) für sämtliche Bits des fünften Datenworts (a2) der erste binäre Zustand bestimmt wird; und

(i) Invertieren eines Bits der Daten, aus denen die Stochastik entfernt worden ist, wenn ein im Schritt (h) erhaltener Zählwert einen vorgegebenen Wert erreicht, um die resultierenden Daten als die Ausgangsdaten zu erzeugen.

**Revendications**

1. Procédé de brouillage de données d'entrée afin de produire des données de sortie brouillées, comprenant les étapes suivantes:

réception des données d'entrée;

décalage des données d'entrée sur une base bit par bit afin de produire un premier mot de données ayant un nombre de bits prédéterminé; et

mise sous forme aléatoire des données d'entrée en utilisant le premier mot de données
CARACTERISE EN CE QUE
ledit procédé comprend en outre les étapes suivantes:

(a) préparation d'un deuxième mot de données (dw0) ayant le nombre de bits prédéterminé, dont au moins un bit, correspondant en position à une position de bit prédéterminée (B12, B9, B8) du premier mot de données, représente un premier état binaire et le ou les bits restant(s) est (sont) invalide(s);

(b) préparation d'un troisième mot de données (dw1) ayant le nombre de bits prédéterminé, dont au moins un bit, correspondant en position à une position de bit prédéterminée (B12, B9, B8) du premier mot de données, représente un deuxième état binaire, opposé au premier état binaire, et le ou les bits restant(s) est (sont) invalide(s);

(c) évaluation d'un bit du premier mot pour déterminer si le bit du premier mot prend le premier ou le deuxième état binaire;

(d) sélection de l'un ou l'autre du second et du troisième mots de données (dw0, dw1), en fonction de l'état binaire déterminé dans ladite étape (c);

(e) réalisation d'une opération OU exclusif sur le mot de données sélectionné parmi les deuxième et troisième mots de données (dw0, dw1), le premier mot de données et le troisième mot de données (dw1), pour produire un quatrième mot de données (a1);

(f) masquage du quatrième mot de données (a1) avec un bit autre qu'un bit correspondant en position à la position de bit prédéterminée (B12, B9, B8) du premier mot de données, pour produire un cinquième mot de données (a2) qui comporte un bit valide (a212, a209, a208) correspondant en position à la position de bit prédéterminée (B12, B9, B8) du premier mot de données avec un bit restant invalide au premier état binaire;

(g) évaluation du cinquième mot de données (a2) pour déterminer si tous les bits ou non du cinquième mot de données (a2) prennent le premier état binaire;

(h) répétition desdites étapes (a) à (g) et comptage lorsque tous les bits du cinquième mot de données (a2) sont déterminés comme le premier état binaire dans ladite étape (g) répétée; et

(i) inversion d'un bit de données mises sous forme aléatoire, lorsque le compte obtenu dans ladite étape (h) atteint une valeur prédéterminée pour produire des données résultantes sous la forme des données de sortie.

2. Procédé de dé-brouillage de données d'entrée pour produire des données de sortie dé-brouillées, comprenant les étapes suivantes:

réception des données d'entrée;

décalage des données d'entrée sur une base bit par bit, pour produire un premier mot de données ayant un nombre de bits prédéterminé; et

suppression de l'état de mise sous forme aléatoire des données d'entrée en utilisant le premier mot de données,

CARACTERISE EN CE QUE
ledit procédé comprend en outre les étapes suivantes:

(a) préparation d'un deuxième mot de données (dw0) ayant le nombre de bits prédéterminé, dont au moins un bit, correspondant en position à une position de bit prédéterminée (B12, B9, B8) du premier mot de données, représente un premier état binaire et le ou les bits restant(s) est (sont) invalide(s);

(b) préparation d'un troisième mot de données (dw1) ayant le nombre de bits prédéterminé, dont au moins un bit, correspondant en position à une position de bit prédéterminée (B12, B9, B8) du premier mot de données, représente un deuxième état binaire, opposé au premier état binaire, et le ou les bits restant(s) est (sont) invalide(s);

(c) évaluation d'un bit du premier mot pour déterminer si le bit du premier mot prend le premier ou le deuxième état binaire;

(d) sélection de l'un ou l'autre du second et du troisième mots de données (dw0, dw1), en fonction de l'état binaire déterminé dans ladite étape (c);

(e) réalisation d'une opération OU exclusif sur le mot de données sélectionné parmi les deuxième et troisième mots de données (dw0, dw1), le premier mot de données et le troisième mot de données (dw1), pour produire un quatrième mot de données (a1);

(f) masquage du quatrième mot de données (a1) avec un bit autre qu'un bit correspondant en position à la position de bit prédéterminée (B12, B9, B8) du premier mot de données, pour produire un cinquième mot de données (a2) qui comporte un bit valide (a212, a209, a208) correspondant en position à la position de bit prédéterminée (B12, B9, B8) du premier mot de données avec un bit restant invalide au premier état binaire;

(g) évaluation du cinquième mot de données (a2) pour déterminer si tous les bits ou non du cinquième mot de données (a2) prennent le premier état binaire;

(h) répétition desdites étapes (a) à (g) et comptage lorsque tous les bits du cinquième mot de données (a2) sont déterminés comme le premier état binaire dans ladite étape (g) répétée; et

(i) inversion d'un bit de données mises sous forme aléatoire, lorsque le compte obtenu dans ladite étape (h) atteint une valeur prédéterminée pour produire des données résultantes sous la forme des données de sortie.

FIG. 1

# FIG.2

COUNT
CONTROL

↓

STORE DATA WORDS
dw0 AND dw1  —21

↓

SELECT dw0 OR dw1  —22

↓

EXCLUSIVE-OR SELECTED
dw0 OR dw1, DATA WORD
Sr, AND dw1  —23

↓

MASK RESULT OF
EXCLUSIVE-OR a1  —24

↓

EVALUATE
RESULT OF MASKING a2
AND BIT INVERT
FLAG q  —25        a2≠0 AND q=0

↓ a2=0 OR q≠0

SET INITIAL VALUE IN
DATA MEMORY TO BE
UPDATED  —26

↓

END

# FIG.3

EP 0 386 781 B1

EP 0 386 781 B1

## FIG. 4A

| | BI5 | BI4 | BI3 | BI2 | BII | BIO | B9 | B8 | B7 | B6 | B5 | B4 | B3 | B2 | BI | BO |
|---|---|---|---|---|---|---|---|---|---|---|---|---|---|---|---|---|
| dw0 | x | x | x | O | x | x | O | O | x | x | x | x | x | x | x | x |

## FIG. 4B

| | BI5 | BI4 | BI3 | BI2 | BII | BIO | B9 | B8 | B7 | B6 | B5 | B4 | B3 | B2 | BI | BO |
|---|---|---|---|---|---|---|---|---|---|---|---|---|---|---|---|---|
| dw1 | x | x | x | 1 | x | x | 1 | 1 | x | x | x | x | x | x | x | x |

## FIG. 4C

| | BI5 | BI4 | BI3 | BI2 | BII | BIO | B9 | B8 | B7 | B6 | B5 | B4 | B3 | B2 | BI | BO |
|---|---|---|---|---|---|---|---|---|---|---|---|---|---|---|---|---|
| a1 | a115 | a114 | a113 | a112 | a111 | a110 | a109 | a108 | a107 | a106 | a105 | a104 | a103 | a102 | a101 | a100 |

## FIG. 4D

| | BI5 | BI4 | BI3 | BI2 | BII | BIO | B9 | B8 | B7 | B6 | B5 | B4 | B3 | B2 | BI | BO |
|---|---|---|---|---|---|---|---|---|---|---|---|---|---|---|---|---|
| Mask | O | O | O | 1 | O | O | 1 | 1 | O | O | O | O | O | O | O | O |

## FIG. 4E

| | BI5 | BI4 | BI3 | BI2 | BII | BIO | B9 | B8 | B7 | B6 | B5 | B4 | B3 | B2 | BI | BO |
|---|---|---|---|---|---|---|---|---|---|---|---|---|---|---|---|---|
| a2 | O | O | O | a212 | O | O | a209 | a208 | O | O | O | O | O | O | O | O |

14

# FIG. 5

82 SCRAMBLER/DESCRAMBLER

CLOCK

85

81

SHIFT REG

bit 6    bit 7          bit 9      bit 12

DESCRAMBLE

bit 0

89

SCRAMBLE

DATA OUT

DATA IN

88        83

MONITOR CKT        83b

J    Q

÷32    ÷2

K    Q̄

COUNTER

85 CLOCK          83a          RESET

t_d          87

84 DELAY TIME ON PATH

COUNTER CONTROL

EP 0 386 781 B1